# EUROPEAN PATENT APPLICATION

(11) **EP 4 769 801 A1**
(43) Date of publication of application: **01.07.2026**
(21) Application number: 25861736.4
(22) Date of filing: 26.06.2025
(51) Int. Cl.: H01M 50/507, H01M 50/291, H01M 50/242, H01M 50/249

(54) **REPEATING FRAME HAVING HIGH-VOLTAGE CONNECTION STRUCTURE, BATTERY MODULE IN WHICH PLURALITY OF REPEATING FRAMES ARE STACKED, AND BATTERY PACK AND VEHICLE INCLUDING BATTERY MODULE**

(30) Priority: 21.10.2024 KR 20240143566
(71) Applicant: LG ENERGY SOLUTION, LTD., Seoul 07335 (KR)
(72) Inventor: KIM, Gwan Woo, Daejeon 34122 (KR); JANG, Sunghwan, Daejeon 34122 (KR); SIN, Byeongha, Daejeon 34122 (KR); SIN, Jehwan, Daejeon 34122 (KR)
(74) Representative: Plasseraud IP
(86) International application number: PCT/KR2025/008937
(87) International publication number: WO 2026/089191

(57) **Abstract**

The present disclosure provides a repeating frame having a high voltage connection structure and accommodating battery cells. The repeating frame includes: a plurality of the battery cells connected to each other in series, in which a positive electrode lead protrudes on one side and a negative electrode lead protrudes on the other side; and a high voltage connector having a pair of busbars arranged between the plurality of battery cells. Each of the pair of busbars is electrically connected to an electrode lead located between the plurality of battery cells.

## Description

### [TECHNICAL FIELD]

The present disclosure relates to a repeating frame having a high voltage connection structure, a battery module in which a plurality of repeating frames are stacked, and a battery pack and a vehicle which include the battery module.

### [BACKGROUND]

A battery module in the related art is means of providing power to an environmentally friendly vehicle that uses electricity as the power, and configures one unit that configures a battery pack.

For this purpose, a plurality of battery cells are electrically connected in series or in parallel to configure the battery module.

The battery module can be simply assembled by attaching and detaching the battery cell to and from a repeating frame, and can be simply assembled by coupling the repeating frame and the battery cell to fit the battery module to be manufactured, and by arranging busbars in accordance with connection in series or in parallel.

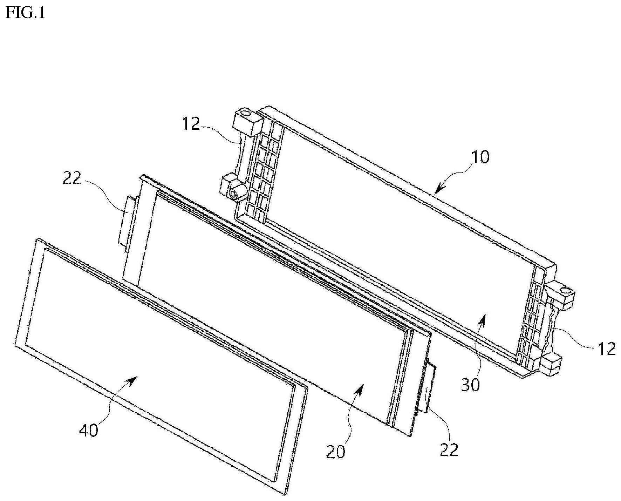

FIG. 1 illustrates a repeating frame-type battery module in the related art, and is an exploded view illustrating the repeating frame, the battery cell, and a cooling plate.

The repeating frame-type battery module in the related art is configured to include a repeating frame 10, a battery cell 20, and a cooling plate 40.

The repeating frame 10 has a corresponding plate-shaped perimeter so that the battery cell 20 is inserted into the repeating plate 10, and is configured to surround a side surface of the battery cell 20.

The battery cell 20 is a plate-shaped unit in which a positive electrode lead 22 is formed on one side and a negative electrode lead 22 is formed on the other side.

The battery cell 20 is inserted in a form of being surrounded by a side surface of the repeating frame 10, and the electrode lead 22 protrudes from the side surface of the repeating frame 10.

The protruding electrode lead 22 is electrically connected to busbars 12 formed on both side surfaces of the repeating frame 10, and for this purpose, the busbars 12 are integrally formed on both side surfaces of the repeating frame 10 by insert injection molding.

The busbar 12 is a conductor connected to the busbar 12 of the adjacent repeating frame 10 to enable electrical connection between the electrode leads 22.

In addition, a pressure pad 30 for applying a surface pressure to the battery cell 20 is integrally coupled to one surface of the repeating frame 10, and a cooling plate 40 for cooling the battery cell 20 is coupled to the other surface of the repeating frame 10.

The repeating frame-type battery module in the related art configured in this way has limitations in manufacturing a battery module having a large area, since one battery cell 20 is inserted into one repeating frame 10.

That is, the repeating frame-type battery module in the related art has a problem in that the number of repeating frames 10 needs to simply increase to increase a size of the battery module.

### (Prior Art Document)

(Patent Document) Korean Patent No. 10-2018-0092061A (2018.08.17)

### [SUMMARY]

### [TECHNICAL PROBLEMS]

The present disclosure has been made to solve various problems in the related art as described above, and an object of the present disclosure is to provide a repeating frame having a high voltage connection structure that can increase a size of a battery module by more freely arraying battery cells, a battery module in which a plurality of the repeating frames are stacked, and a battery pack and a vehicle which include the battery module.

### [TECHNICAL SOLUTION]

According to the present disclosure, there is provided a repeating frame that accommodates battery cells and has a high voltage connection structure. The repeating frame includes: a plurality of the battery cells connected to each other in series, in which a positive electrode lead protrudes on one side and a negative electrode lead protrudes on the other side; and a high voltage connector having a pair of busbars arranged between the plurality of battery cells, wherein each of the pair of busbars is electrically connected to an electrode lead located between the plurality of battery cells.

The repeating frame may include a high voltage connection structure that accommodates a pair of the battery cells connected to each other in series, wherein the high voltage connector is formed at a center of the repeating frame.

In the repeating frame, a first accommodation groove for accommodating a first busbar may be formed on one surface of the high voltage connector, and a second accommodation groove for accommodating a second busbar may be formed on a surface opposite to the one surface of the high voltage connector.

A first through-hole communicating with the first accommodation groove and a second through-hole communicating with the second accommodation groove may be formed on an upper surface of the high voltage connector.

The pair of busbars may be formed in the high voltage connector by insert injection molding.

Second fastening holes penetrating along a thickness direction of the repeating frame may be formed in both end portions in a longitudinal direction of the repeating frame and the high voltage connector.

According to another aspect of the present disclosure, there is provided a repeating frame having a plate-shaped perimeter for accommodating a plurality of plate-shaped battery cells and having a high voltage connection structure. The repeating frame includes: a partition portion that partitions the plurality of battery cells and is formed along a width direction of the repeating frame; and a high voltage connector in which a pair of busbars is arranged, the high voltage connector being formed in a portion in contact with leads of the battery cells on the perimeter of the repeating frame, wherein each of the plurality of the battery cells has leads of mutually different electrodes arranged separate from each other on one surface and is arranged in parallel with each other, and the busbar is electrically connected to at least one of the leads.

The partition portion may be provided at three locations.

According to another aspect of the present disclosure, there is provided a battery module including: a plurality of the repeating frames; a module case that accommodates the plurality of the repeating frames into which battery cells are inserted, wherein the plurality of repeating frames are stacked and accommodated in the module case; and an end cover coupled to a front side and a rear side of the module case.

First fastening holes penetrating along a width direction of the module case may be formed in both end portions and a central portion in a longitudinal direction of the module case, and second fastening holes may be formed in the repeating frame at positions corresponding to the first fastening holes.

According to another aspect of the present disclosure, there is provided a battery pack including a plurality of the battery modules and a pack case that accommodates the plurality of the battery modules.

According to another aspect of the present disclosure, there is provided a vehicle including the battery pack.

### [ADVANTAGEOUS EFFECTS]

According to the solution to the above-described problem, the present disclosure has the following advantageous effects.

The present disclosure provides an advantageous effect as follows. A plurality of battery cells in which leads having mutually different electrodes are formed on both sides are arranged in series in a repeating frame, and a high voltage connector in which a pair of busbars is arranged in the repeating frame between the plurality of battery cells. In this manner, the battery cells are more freely arrayed to increase a size of a battery module.

In addition, the present disclosure provides an advantageous effect as follows. A plurality of battery cells in which leads having mutually different electrodes formed separate from each other on one side are arranged in parallel in the repeating frame, and a partition portion that partitions the plurality of battery cells is formed along a width direction of the repeating frame. A high voltage connector in which a pair of busbars is arranged is formed in a portion in contact with the lead of the battery cells on a perimeter of the repeating frame. In this manner, the battery cells are more freely arrayed to increase a size of a battery module.

Furthermore, the present disclosure provides an advantageous effect as follows. A first fastening hole penetrating along a width direction of a module case is formed in both ends and a central portion in a longitudinal direction of the module case, and a second fastening hole is formed at a position corresponding to the first fastening hole in the repeating frame. A bolt is fitted into and fastened to the first fastening hole and the second fastening hole, thereby improving stiffness against swelling of the battery cell.

### [BRIEF DESCRIPTION OF THE DRAWING]

FIG. 1 is a diagram illustrating a repeating frame-type battery module in the related art, and is an exploded view illustrating a repeating frame, a battery cell, and a cooling plate.
FIG. 2 is a diagram illustrating a battery module according to one aspect of the present disclosure.
FIG. 3 is a diagram illustrating a state where a plurality of the battery cells are stacked inside the repeating frame according to one aspect of the present disclosure.
FIG. 4 is a diagram illustrating a separated state of a cell assembly in which the plurality of battery cells are stacked in FIG. 3.
FIG. 5 is a diagram illustrating a separated state of a plurality of the repeating frames in FIG. 3.
FIG. 6 is a diagram for describing a high voltage connector of the repeating frame according to one aspect of the present disclosure.
FIG. 7 is a diagram illustrating a state when FIG. 6 is viewed from an opposite side.
FIG. 8 is a diagram illustrating a repeating frame according to another aspect of the present disclosure.
FIG. 9 is a diagram illustrating a state where a battery cell is inserted into the repeating frame in FIG. 8.
FIG. 10 is a diagram schematically illustrating a configuration of a battery pack according to the present disclosure.
FIG. 11 is a drawing schematically illustrating a vehicle including the battery pack in FIG. 10.

### [DETAILED DESCRIPTION]

Advantages and features of the present disclosure, and methods for achieving the advantages and features of the present disclosure will become apparent with reference to aspects described below in detail together with the accompanying drawings. However, the present disclosure is not limited to the aspects disclosed below, and may be realized in various different forms. The present aspects are provided only to make the disclosure of the present disclosure complete, and to fully address the scope of the present disclosure to those skilled in the art to which the present disclosure pertains. The present disclosure is defined only by the appended claims. Therefore, in some aspects, well-known process steps, well-known device structures, and well-known techniques are not specifically described in order to avoid ambiguity in the interpretation of the present disclosure. The same reference numerals refer to the same elements throughout the specification.

In order to clearly represent multiple layers and regions in the drawings, a thickness may be enlarged. The same reference numerals are assigned to similar elements throughout the specification. When it is described that one element such as a layer, a film, a region, or a plate is located "over" another element, this description includes not only a case where one element is located "directly over" another element, but also a case where still another element is located therebetween. Conversely, when it is described that one element is located "directly over" another element, this description means that no other element is located therebetween. In addition, when it is described that one element such as the layer, the film, the region, or the plate is located "below" another element, this description includes not only a case where one element is located "directly below" another element, but also a case where still another element is located therebetween. Conversely, when it is described that one element is located "directly below" another element, this description means that no other element is located therebetween.

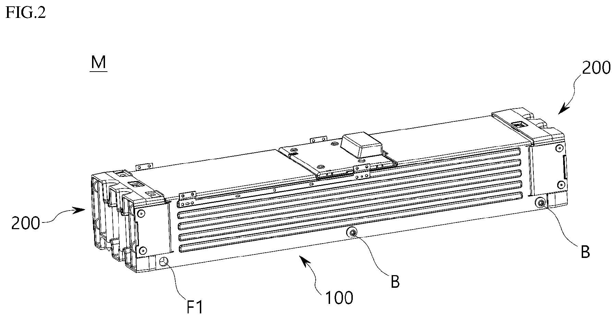

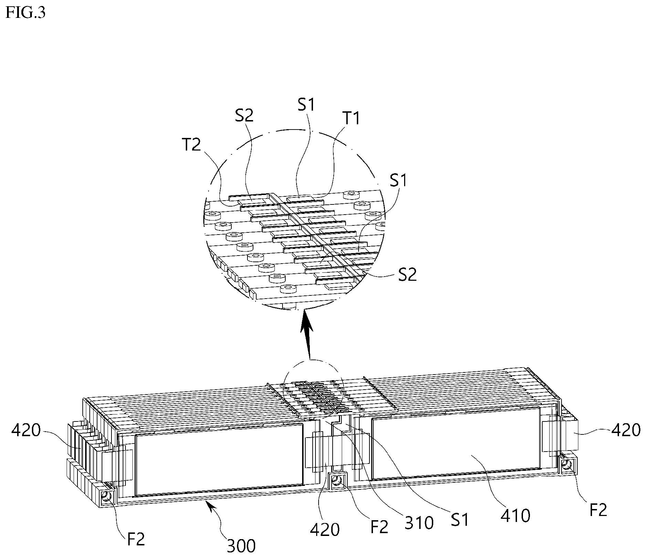

FIG. 2 is a diagram illustrating a battery module according to one aspect of the present disclosure, and FIG. 3 is a diagram illustrating a state where a plurality of battery cells are stacked inside a repeating frame according to one aspect of the present disclosure.

A battery module M according to the present disclosure forms one unit that forms a battery pack as means for providing power to an environmentally friendly vehicle that uses electricity as the power.

For this purpose, a plurality of battery cells 410 are electrically connected in series or in parallel.

A repeating frame 300 according to one aspect of the present disclosure accommodates the plurality of battery cells 410 connected to each other in series, in which a positive electrode lead protrudes on one side and a negative electrode lead protrudes on the other side.

The battery module M according to one aspect of the present disclosure includes the repeating frame 300 having a plate-shaped periphery into which the plate-shaped battery cell 410 is inserted, a module case 100 in which a plurality of the repeating frames 300 having the inserted battery cell 410 are stacked and accommodated, and an end cover 200 coupled to open front and rear sides of the module case 100.

The battery module M of the present disclosure may be simply assembled by detaching and attaching the battery cell 410 from and to the repeating frame 300, and may be simply assembled by coupling as many battery cells 410 of the battery module M as desired to be manufactured, and by arraying busbars in series or in parallel.

The module case 100 is intended to protect the cell assembly 400 and electrical components connected thereto from an external physical impact, and is configured such that the cell assembly 400 and the electrical components connected thereto are accommodated in an internal space of the module case 100.

Front and rear sides of the module case 100 have an open form.

Here, First fastening hole F1 penetrating along a width direction of the module case 100 are formed in lower ends of both end portions and a lower of a central portion in a longitudinal direction of the module case 100.

In addition, in the repeating frame 300, second fastening holes F2 penetrating along the thickness direction of the repeating frame 300 are formed to correspond to the first fastening hole F1 in lower ends of both end portions in the longitudinal direction of the repeating frame 300 and a lower end of a high voltage connector 310 (to be described later).

Accordingly, a bolt B is fitted into and fastened to the first fastening hole F1 and the second fastening hole F2, thereby improving stiffness against swelling of the battery cell 410.

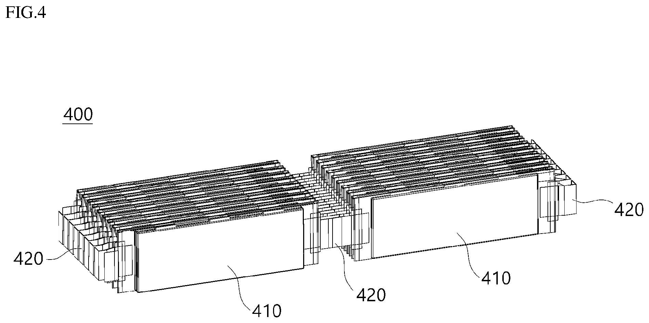

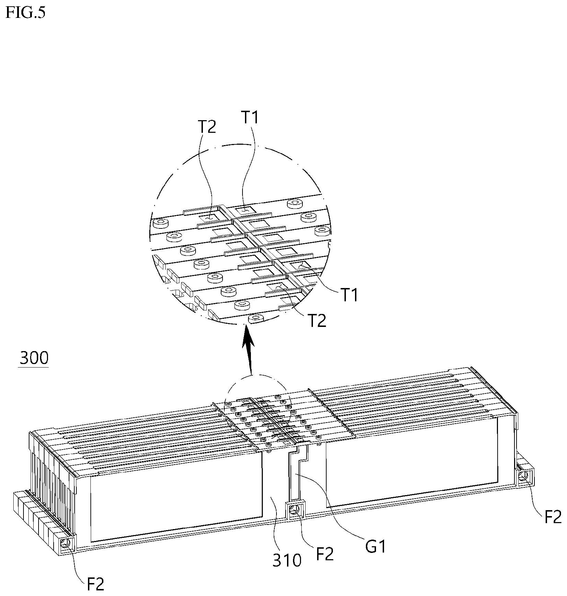

FIG. 4 is a diagram illustrating a separated state of the cell assembly in which the plurality of battery cells are stacked in FIG. 3, and FIG. 5 is a diagram illustrating a separated state of a plurality of the repeating frames in FIG. 3.

The cell assembly 400 is formed by stacking the plurality of battery cells 410 along one direction, and the plurality of battery cells 410 are electrically connected.

The repeating frame 300 according to one aspect of the present disclosure is formed in a frame shape having a plate-shaped perimeter into which the plate-shape battery cell 410 is inserted.

In the repeating frame 300 formed in this way, a plurality of the battery cells 410 in which leads 420 having mutually different electrodes are formed on both sides are arranged in series.

The battery cell 410 is a plate-shaped unit in which a positive lead 420 is formed on one side and a negative lead is formed on the other side.

The repeating frame 300 may include the high voltage connector 310 having a pair of busbars S1 and S2 arranged between the plurality of battery cells 410.

Here, each of the pair of busbars S1 and S2 is electrically connected to an electrode lead 420 located between the plurality of battery cells 410.

For example, the repeating frame 300 may accommodate the pair of battery cells 410 connected with each other in series, and the high voltage connector 310 may be formed at the center of the repeating frame 300.

In another configuration, in the high voltage connector 310, the pair of busbars S1 and S2 may be formed by insert injection molding.

In this way, according to the present disclosure, the plurality of battery cells 410 in which the leads 420 having mutually different electrodes fare respectively formed on both sides are provided and arranged in series in the repeating frame 300. The high voltage connector 310 in which the pair of busbars S1 and S2 are arranged is formed in the repeating frame 300 between the plurality of battery cells 410. In this manner, the battery cells 410 are more freely arrayed to increase a size of the battery module M.

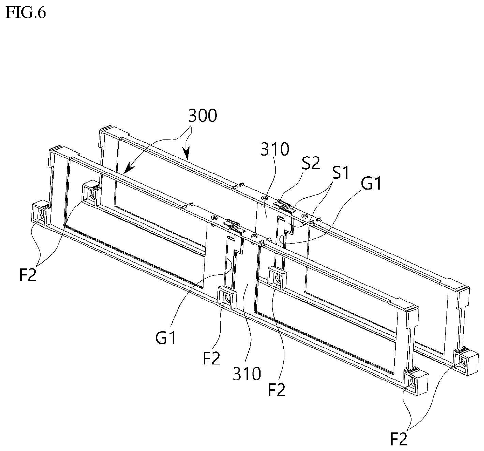

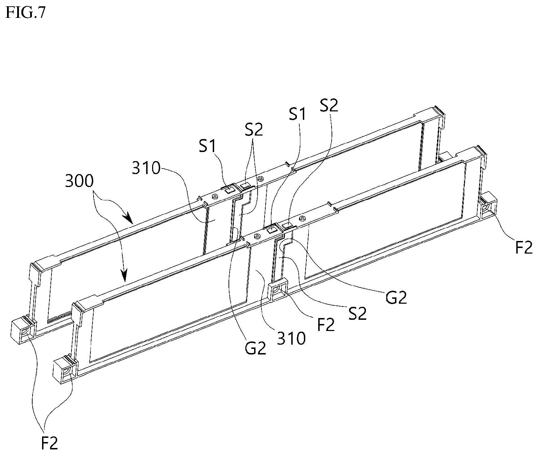

FIG. 6 is a diagram for describing the high voltage connector of the repeating frame according to one aspect of the present disclosure, and FIG. 7 is a diagram illustrating a state when FIG. 6 is viewed from an opposite side.

On one surface of the high voltage connector 310, a first accommodation groove G1 is formed to accommodate the first busbar S1, and on a surface opposite to the one surface of the high voltage connector 310, a second accommodation groove G2 is formed to accommodate the second busbar S2.

In addition, a first through-hole T1 communicating with the first accommodation groove G1 and a second through-hole T2 communicating with the second accommodation groove G2 are formed on an upper surface of the high voltage connector 310.

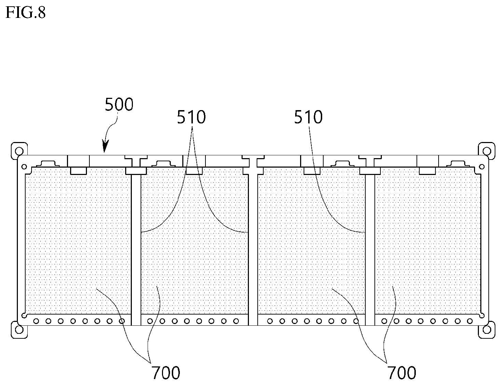

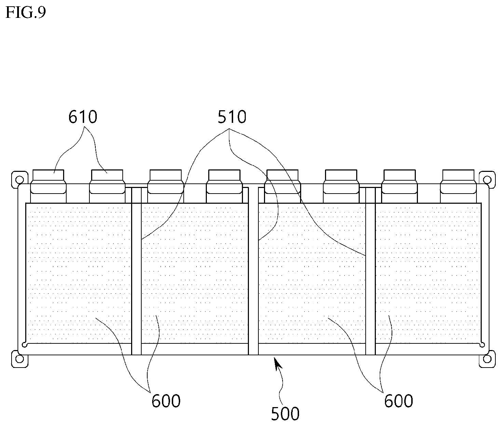

FIG. 8 is a diagram illustrating a repeating frame according to another aspect of the present disclosure, and FIG. 9 is a diagram illustrating a state where the battery cell is inserted into the repeating frame in FIG. 8.

According to another aspect of the present disclosure, as the repeating frame, a plurality of battery cells 600 in which leads 610 having mutually different electrodes are arranged separate from each other on one surface are arranged in parallel, and in the repeating frame 500, a partition portion 510 that partitions the plurality of battery cells 600 may be formed along the width direction of the repeating frame 500.

A high voltage connector (not illustrated) having a pair of busbars is formed in a portion in contact with the leads 610 of the battery cell 600 on a perimeter of the repeating frame 500 formed in a frame shape.

The battery cell 600 is inserted in a form of being surrounded by the periphery of the repeating frame 500, and the lead 610 protrudes on an upper surface of the repeating frame 500.

The protruding lead 610 is electrically connected to the busbar of the high voltage connector (not illustrated) formed on the upper surface of the repeating frame 500. For this purpose, the busbar may be integrally formed on the upper surface of the repeating frame 500 by insert injection molding.

The busbar is a conductor, and is electrically connected to at least one of the electrode leads 610 located between the plurality of battery cells 600.

Here, the partition portions 510 may be provided at three locations. Depending on a device, a mechanism, or a facility of a vehicle which uses electricity as power, the number of the partition portion 510 may be increased to four, five, and the like to arrange more battery cells 600 in parallel.

A reference numeral 700 (not described) is a cooling plate for cooling the battery cell 600.

In this way, according to the present disclosure, the plurality of battery cells 600 in which the leads 610 having mutually different electrodes are arranged separate from each other on one surface are arranged in parallel on the repeating frame 500, and the partition portion 510 that partitions the plurality of battery cells 600 is formed along the width direction of the repeating frame 500. The high voltage connector (not illustrated) in which the pair of busbars is arranged is formed in a portion in contact with the lead 610 of the battery cell 600 in the perimeter of the repeating frame 500. In this manner, the battery cells 600 are more freely arrayed to increase a size of the battery module M.

Meanwhile, the battery module may be manufactured by inserting two or more battery cells into the repeating frame, and the series and parallel configurations may be configured through coupling by simply changing the directions of the positive lead and the negative lead of the battery cells when necessary, and any series and parallel combinations may be realized.

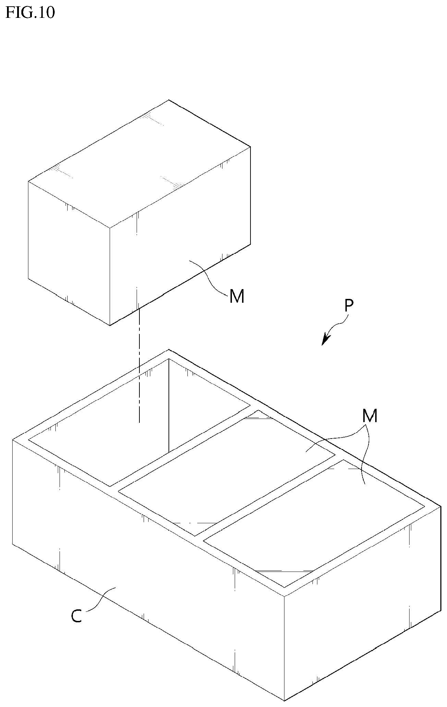

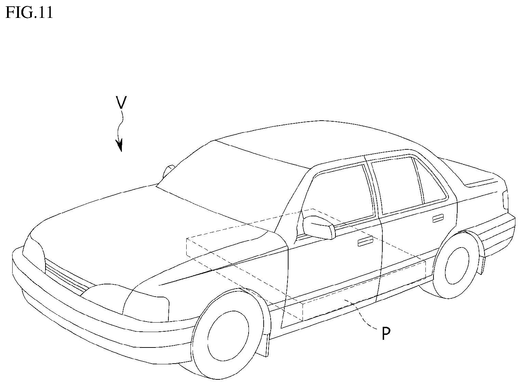

FIG. 10 is a diagram schematically illustrating a configuration of a battery pack according to the present disclosure, and FIG. 11 is a diagram schematically illustrating a vehicle including the battery pack in FIG. 10.

A battery pack P includes the battery module M described above and a pack case C in which a plurality of the battery modules M are provided and stored.

This battery pack P may be provided in the vehicle V as a fuel source for the vehicle.

For example, the battery pack P may be provided in the vehicle V as an electric vehicle, a hybrid vehicle, and any other method that may utilize the battery pack P as the fuel source.

In addition, the battery pack P may also be provided in other devices, mechanisms, and facilities, such as an energy storage system that uses a secondary battery, in addition to the vehicle V.

In this way, according to the present disclosure, the battery pack P and the device, the mechanism, and the facility which include the battery pack P such as the vehicle V include the battery module M described above. Therefore, it is possible to realize the battery pack P having all advantages of the battery module M described above, and the device, the mechanism, and the facility which such as the vehicle which include the battery pack P.

### [DESCRIPTION OF REFERENCE NUMERALS]

M: battery module
P: battery pack
C: pack case
V: vehicle
100: module case
200: end cover
300: repeating frame
310: high voltage connector
400: cell assembly

## Claims

1. A repeating frame that accommodates battery cells, having a high voltage connection structure, comprising:
a plurality of the battery cells connected to each other in series, in which a positive electrode lead protrudes on one side and a negative electrode lead protrudes on the other side; and
a high voltage connector having a pair of busbars arranged between the plurality of battery cells,
wherein each of the pair of busbars is electrically connected to an electrode lead located between the plurality of battery cells.

2. The repeating frame of claim 1, wherein the high voltage connection structure accommodates a pair of the battery cells connected to each other in series, and the high voltage connector is formed at a center of the repeating frame.

3. The repeating frame of claim 2, wherein a first accommodation groove for accommodating a first busbar is formed on one surface of the high voltage connector, and a second accommodation groove for accommodating a second busbar is formed on a surface opposite to the one surface of the high voltage connector.

4. The repeating frame of claim 3, wherein a first through-hole communicating with the first accommodation groove and a second through-hole communicating with the second accommodation groove are formed on an upper surface of the high voltage connector.

5. The repeating frame of claim 2, wherein the pair of busbars is formed in the high voltage connector by insert injection molding.

6. The repeating frame of claim 1, wherein second fastening holes penetrating along a thickness direction of the repeating frame are formed in both end portions in a longitudinal direction of the repeating frame and the high voltage connector.

7. A repeating frame having a plate-shaped perimeter for accommodating a plurality of plate-shaped battery cells, the repeating frame having a high voltage connection structure, the repeating frame comprising:
a partition portion that partitions the plurality of battery cells and is formed along a width direction of the repeating frame; and
a high voltage connector in which a pair of busbars is arranged, the high voltage connector being formed in a portion in contact with leads of the battery cells on the perimeter of the repeating frame,
wherein each of the plurality of the battery cells has leads of mutually different electrodes arranged separate from each other on one surface and is arranged in parallel with each other, and
wherein the busbar is electrically connected to at least one of the leads.

8. The repeating frame of claim 7, wherein the partition portion is provided at three locations.

9. A battery module comprising:
a plurality of the repeating frames according to any one of claims 1 to 8;
a module case that accommodates the plurality of the repeating frames into which battery cells are inserted, wherein the plurality of repeating frames are stacked and accommodated in the module case; and
an end cover coupled to a front side and a rear side of the module case.

10. The battery module of claim 9, wherein first fastening holes penetrating along a width direction of the module case are formed in both end portions and a central portion in a longitudinal direction of the module case, and second fastening holes are formed in the repeating frame at positions corresponding to the first fastening holes.

11. A battery pack comprising:
a plurality of the battery modules of claim 9; and
a pack case that accommodates the plurality of the battery modules.

12. A vehicle comprising the battery pack of claim 11.
